# EUROPEAN PATENT SPECIFICATION

(11) **EP 2 931 618 B1**
(45) Date of publication and mention of the grant of the patent: **29.07.2020**
(21) Application number: 14815440.4
(22) Date of filing: 21.11.2014
(51) Int. Cl.: B65D 47/12, B65D 47/20, B65D 47/24, B65D 47/30, B65D 41/16, B65D 41/20, B65D 75/58, B65D 77/06

(54) **ADAPTERS FOR CONSUMABLE PRODUCT PACKAGES AND METHODS FOR USING SAME**
ADAPTER FÜR VERBRAUCHSPRODUKTVERPACKUNGEN UND VERFAHREN ZUR VERWENDUNG DAVON
ADAPTATEURS POUR EMBALLAGES DE PRODUITS CONSOMMABLES ET LEURS PROCÉDÉS D'UTILISATION

(30) Priority: 26.11.2013 US 201361909368 P; 08.07.2014 US 201462021734 P
(43) Date of publication of application: 21.10.2015
(60) Divisional application: 17187706.1
(73) Proprietor: Société des Produits Nestlé S.A., 1800 Vevey (CH)
(72) Inventor: DZIKOWICZ, Anthony Edward, Grand Haven, Michigan 49417 (US); RODGERS, Matthew Blake, Grand Haven, Michigan 49417 (US); WOLF, John Joseph, Norton Shores, Michigan 49444 (US); GENAW, JR., Joel Dean, Grand Rapids, Michigan 49504 (US)
(74) Representative: Kiwit, Benedikt
(86) International application number: PCT/IB2014/066245
(87) International publication number: WO 2015/079371

(56) References cited:
- EP-A1- 0 016 475
- EP-A2- 0 856 331
- WO-A1-2006/046262
- WO-A1-2009/116850
- WO-A1-2010/082017
- WO-A2-03/070593
- US-A1- 2006 006 202
- US-A1- 2008 142 543
- US-A1- 2008 208 159
- US-A1- 2010 044 397
- US-A1- 2013 146 174
- US-A1- 2013 269 827
- US-B1- 6 321 948

## Description

### BACKGROUND

The present disclosure relates generally to packaging. More specifically, the present disclosure relates to adapters for consumable product packages and methods for making and using same.

The present invention defined in claim 1 concerns an adapter assembly having a flow-control functional feature. Claim 7 defines a package comprising the adapter assembly according to the invention. Claim 10 defines a method for providing a nutritional composition to an individual which method makes use of an adapter assembly according to the invention.

US 2013/146174 A1 discloses the features of the preamble of claim 1. In this prior art, the adapter assembly includes a rotatable ball valve.

Packages for consumable products come in a variety of sizes, shapes, materials and designs. These sizes, shapes, materials and designs can differ, for example, for aesthetic reasons. Although consumable product packaging may be provided to enhance aesthetic qualities of packages, the purposes for consumable product packaging are not limited to only this purpose.

Indeed, consumable product packages aimed at providing improved aesthetic qualities of a package may not always provide optimal functionality or use, and may not sufficiently aid consumers in handling of the packages, completely emptying the packages, storing the packages, stacking the packages, displaying the packages, etc. Instead, consumable product packages having specific shapes, sizes, and characteristics designed for convenience and ease of use may provide functional advantages for a consumer and/or user of such packages in addition to possible aesthetic advantages.

Further prior art references (US 6,321,948 B1; WO 03/070593 A1; US 2008/142543 A1) disclose adapter assemblies provided with rotatable valve elements which have cylinder-shaped bodies.

### SUMMARY

The present disclosure is related to packages for housing consumable products. The packages may be functional, contemporary packages that provide easy handling of the packages by a toddler during feeding, and functional features that are advantageous during the feeding of an infant or toddler.

In an embodiment, an adapter assembly is provided and includes an adapter having an outlet. The adapter is so constructed and arranged to provide a functional feature and to attach to a fitment on a package. The assembly further includes a cap that is so constructed and arranged to attach to the adapter to close the outlet. In an embodiment, the adapter is so constructed and arranged to attach to the external surface of the fitment. In a further embodiment, the adapter is so constructed and arranged to attach to the internal surface of the fitment. The connector may include threading or a ridge or depression on an external surface of the adapter that is configured to cooperate with threading or a ridge or depression on an internal surface of the fitment to attach the adapter to the fitment.

In an embodiment, the adapter includes a structure selected from the group consisting of a diaphragm; a rotatable flow-control device; a reduced size of the outlet; a contact-to-open valve; an elongated, cylindrical extension; an extension having a substantially duck-bill shape; or combinations thereof.

In an embodiment, the functional feature is selected from the group consisting of spill-resistance, flow-control, ease of insertion into a consumer's mouth, comfortable insertion into a consumer's mouth, or combinations thereof.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the adapter includes a body portion that is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap includes threading on an internal surface thereof that is configured to cooperate with threading on an external surface of the adapter to attach the cap to the adapter. The cap may be so constructed and arranged to seal the outlet of the adapter.

In another embodiment, a package is provided and includes a flexible plastic pouch having a fitment and being so constructed and arranged to house a product. The package further includes an adapter assembly having an adapter with an outlet, wherein the adapter is so constructed and arranged to provide a functional feature and to attach to a fitment of a package. The assembly also includes a cap that is so constructed and arranged to attach to the adapter to close the outlet.

In an embodiment, the adapter includes a structure selected from the group consisting of a diaphragm; a rotatable flow-control device; a reduced size of the outlet; a contact-to-open valve; an elongated, cylindrical extension; an extension having a substantially duck-bill shape; or combinations thereof.

In an embodiment, the functional feature is selected from the group consisting of spill-resistance, flow-control, ease of insertion into a consumer's mouth, comfortable insertion into a consumer's mouth, or combinations thereof.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the adapter includes a body portion that is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap includes threading on an internal surface thereof that is configured to cooperate with threading on an external surface of the adapter to attach the cap to the adapter. The cap may be so constructed and arranged to seal the outlet of the adapter.

In yet another embodiment, a two-component adapter is provided and includes a first component having an outlet that is so constructed and arranged to provide a functional feature, and a second component that is so constructed and arranged to attach to the first component to close the outlet. The first component is so constructed and arranged to attach to a fitment of a package.

In an embodiment, the first component includes a structure selected from the group consisting of a diaphragm; a rotatable flow-control device; a reduced size of the outlet; a contact-to-open valve; an elongated, cylindrical extension; an extension having a substantially duck-bill shape; or combinations thereof.

In an embodiment, the functional feature is selected from the group consisting of spill-resistance, flow-control, ease of insertion into a consumer's mouth, comfortable insertion into a consumer's mouth, or combinations thereof.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the first component includes a body portion that is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the second component includes threading on an internal surface thereof that is configured to cooperate with threading on an external surface of the first component to attach the second component to the first component.

In an embodiment, the second component is so constructed and arranged to seal the outlet of the first component.

In still yet another embodiment, a package is provided and includes a flexible plastic pouch having a fitment and being so constructed and arranged to house a product. The package further includes a two-component adapter having a first component with an outlet that is so constructed and arranged to provide a functional feature, and a second component that is so constructed and arranged to attach to the first component to close the outlet. The first component is so constructed and arranged to attach to a fitment of a package.

In an embodiment, the first component includes a structure selected from the group consisting of a diaphragm; a rotatable flow-control device; a reduced size of the outlet; a contact-to-open valve; an elongated, cylindrical extension; an extension having a substantially duck-bill shape; or combinations thereof.

In an embodiment, the functional feature is selected from the group consisting of spill-resistance, flow-control, ease of insertion into a consumer's mouth, comfortable insertion into a consumer's mouth, or combinations thereof.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the first component includes a body portion that is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the second component includes threading on an internal surface thereof that is configured to cooperate with threading on an external surface of the first component to attach the second component to the first component.

In an embodiment, the second component is so constructed and arranged to seal the outlet of the first component.

In yet another embodiment, a package adapter is provided and includes a valve component having a body defining an interior and having an outlet and a connector. The outlet includes a diaphragm having a slit. The connector is configured to attach the valve component to a fitment of a package. The adapter further includes a cap component that is so constructed and arranged to attach to the valve component to close the outlet.

In an embodiment, the diaphragm is so constructed and arranged to resist spillage of a product from the package.

In an embodiment, the slit includes a shape selected from the group consisting of a line, an "x," a crescent, or combinations thereof.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component.

In an embodiment, the cap component is so constructed and arranged to seal the outlet of the valve component body.

In another embodiment, a package is provided and includes a flexible plastic pouch having a fitment and being so constructed and arranged to house a product. The package further includes an adapter having a valve component with a body defining an interior and having an outlet and a connector. The outlet includes a diaphragm having a slit, and the connector is configured to attach the valve component to the fitment. The adapter further includes a cap component that is so constructed and arranged to attach to the valve component to close the outlet.

In an embodiment, the diaphragm is so constructed and arranged to resist spillage of the product from the package.

In an embodiment, the slit includes a shape selected from the group consisting of a line, an "x," a crescent, or combinations thereof.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component. The cap component may be so constructed and arranged to seal the outlet of the valve component body.

In yet another embodiment, a package adapter is provided and includes a valve component having a body defining an interior and having an outlet, a connector and a rotatable flow-control device. The connector is configured to attach the valve component to a fitment of a package. The adapter further includes a cap component that is so constructed and arranged to attach to the valve component to close the outlet.

In an embodiment, the flow-control device extends substantially through a width of the body of the valve component.

In an embodiment, the flow-control device includes a handle for rotating the device.

In an embodiment, the flow-control device includes a cylinder having an axis of rotation that is perpendicular to an axis of rotation of the valve component.

In an embodiment, the cylinder includes a hole extending through the cylinder in a direction that is parallel to a diameter of the cylinder.

In an embodiment, the hole is so constructed and arranged to align with the interior of the body of the valve component.

In an embodiment, the hole may wholly or partially align with the interior of the body of the valve component depending on the rotation of the flow-control device.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component.

In an embodiment, the cap component is so constructed and arranged to seal the outlet of the valve component body.

In still yet another embodiment, a package is provided and includes a flexible plastic pouch having a fitment and being so constructed and arranged to house a product. The package further includes an adapter having a valve component with a body defining an interior and having an outlet, a connector and a rotatable flow-control device. The connector is configured to attach the valve component to the fitment. The adapter further includes a cap component that is so constructed and arranged to attach to the valve component to close the outlet.

In an embodiment, the flow-control device extends substantially through a width of the body of the valve component.

In an embodiment, the flow-control device includes a handle for rotating the device.

In an embodiment, the flow-control device includes a cylinder having an axis of rotation that is perpendicular to an axis of rotation of the valve component.

In an embodiment, the cylinder includes a hole extending through the cylinder in a direction that is parallel to a diameter of the cylinder.

In an embodiment, the hole is so constructed and arranged to align with the interior of the body of the valve component.

In an embodiment, the hole may wholly or partially align with the interior of the body of the valve component depending on the rotation of the flow-control device.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter is so constructed and arranged to attach to the external surface of the fitment. In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In a further embodiment, the adapter is so constructed and arranged to attach to the internal surface of the fitment. The connector may include threading or a ridge or depression on an external surface of the adapter that is configured to cooperate with threading or a ridge or depression on an internal surface of the fitment to attach the adapter to the fitment.

In an embodiment, the cap component includes threading on an internal surface thereof that is configured to cooperate with threading on an external surface of the valve component to attach the cap component to the valve component. The cap component may be so constructed and arranged to seal the outlet of the valve component body.

In yet another embodiment, a package adapter is provided and includes a valve component having a body defining an interior and having an outlet and a connector. The outlet is so constructed and arranged to reduce a flow rate of a product exiting the outlet. The connector is configured to attach the valve component to a fitment of a package. The adapter further includes a cap component that is so constructed and arranged to attach to the valve component to close the outlet.

In an embodiment, the flow rate of the product is reduced when compared to a product flow rate exiting the valve component from an outlet that is the size of a diameter of the body of the valve component.

In an embodiment, the outlet includes a geometric shape selected from the group consisting of a circle, star, rectangle, square, triangle, semi-circle, oval, trapezoid, crescent, pentagon, or combinations thereof. Alternatively, the outlet includes a shape that is a letter, or even a number.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component. The cap component may be so constructed and arranged to seal the outlet of the valve component body.

In still yet another embodiment, a package is provided and includes a flexible plastic pouch having a fitment and being so constructed and arranged to house a product. The package further includes an adapter having a valve component with a body defining an interior and having an outlet and a connector. The outlet is so constructed and arranged to reduce a flow rate of a product exiting the outlet. The connector is configured to attach the valve component to the fitment. The adapter further includes a cap component that is so constructed and arranged to attach to the valve component to close the outlet.

In an embodiment, the flow rate of the product is reduced when compared to a product flow rate exiting the valve component from an outlet that is the size of a diameter of the body of the valve component.

In an embodiment, the outlet includes a geometric shape selected from the group consisting of a circle, star, rectangle, square, triangle, semi-circle, oval, trapezoid, crescent, pentagon, or combinations thereof. Alternatively, the outlet includes a shape that is a letter, or even a number.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component. The cap component may be so constructed and arranged to seal the outlet of the valve component body.

In another embodiment, a package adapter is provided and includes a valve component having a body defining an interior and having an outlet and a connector. The valve component is so constructed and arranged to prevent a product from exiting the outlet absent application of a pressure to the valve component. The connector is configured to attach the valve component to a fitment of a package. The adapter further includes a cap component that is so constructed and arranged to attach to the valve component to close the outlet.

In an embodiment, the valve component includes an outer ring portion surrounding an inner ring portion that includes the outlet.

In an embodiment, the valve component is so constructed and arranged to prevent a product from exiting the outlet absent application of a pressure to the outer ring portion of the valve component.

In an embodiment, the valve component is configured to allow a product to exit the outlet upon application of a pressure to the outer ring portion in a directed that is substantially parallel to an axis of rotation of the valve component.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component. The cap component may be so constructed and arranged to seal the outlet of the valve component body.

In yet another embodiment, a package is provided and includes a flexible plastic pouch having a fitment and being so constructed and arranged to house a product. The package further includes an adapter having a valve component with a body defining an interior and having an outlet and a connector. The outlet is so constructed and arranged to prevent a product from exiting the outlet absent application of a pressure to the valve component. The connector is configured to attach the valve component to the fitment. The adapter further includes a cap component that is so constructed and arranged to attach to the valve component to close the outlet.

In an embodiment, the valve component includes an outer ring portion surrounding an inner ring portion that includes the outlet.

In an embodiment, the valve component is so constructed and arranged to prevent a product from exiting the outlet absent application of a pressure to the outer ring portion of the valve component.

In an embodiment, the valve component is configured to allow a product to exit the outlet upon application of a pressure to the outer ring portion in a directed that is substantially parallel to an axis of rotation of the valve component.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component. The cap component may be so constructed and arranged to seal the outlet of the valve component body.

In still yet another embodiment, a package adapter is provided and includes a valve component having a body defining an interior and having a connector and an outlet at an end of an extension of the body. The extension has a substantially elongated, cylindrical shape. The connector is configured to attach the valve component to a fitment of a package. The adapter further includes a cap component that is configured to attach to the valve component to seal the outlet of the valve component.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component.

In an embodiment, the cap component is so constructed and arranged to seal the outlet of the valve component body.

In still yet another embodiment, a package is provided and includes a flexible plastic pouch having a fitment and being so constructed and arranged to house a product. The package further includes an adapter having a valve component with a body defining an interior and having a connector and an outlet at an end of an extension of the body. The extension has a substantially elongated, cylindrical shape. The connector is configured to attach the valve component to the fitment. The adapter further includes a cap component that is so constructed and arranged to attach to the valve component to close the outlet.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component. The cap component may be so constructed and arranged to seal the outlet of the valve component body.

In another embodiment, a package adapter is provided and includes a valve component having a body defining an interior and having a connector and an outlet at an end of an extension of the body. The extension has a substantially duck-bill shape. The connector is configured to attach the valve component to a fitment of a package. The adapter further includes a cap component that is so constructed and arranged to attach to the valve component to close the outlet.

In an embodiment, the duck-bill shape of the extension includes a substantially elongated, rounded, rectangular shape. The outlet may be located along a width of the substantially elongated, rounded, rectangular shape. In an embodiment, the duck-bill shape of the extension provides for easy, comfortable insertion into a consumer's mouth.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component. The cap component may be so constructed and arranged to seal the outlet of the valve component body.

In another embodiment, a package is provided and includes a flexible plastic pouch having a fitment and being so constructed and arranged to house a product. The package further includes an adapter having a valve component with a body defining an interior and having a connector and an outlet at an end of an extension of the body having a substantially duck-bill shape. The connector is configured to attach the valve component to the fitment. The adapter further includes a cap component that is so constructed and arranged to attach to the valve component to close the outlet.

In an embodiment, the duck-bill shape of the extension includes a substantially elongated, rounded, rectangular shape. The outlet may be located along a width of the substantially elongated, rounded, rectangular shape. In an embodiment, the duck-bill shape of the extension provides for easy, comfortable insertion into a consumer's mouth.

In an embodiment, the package is a consumable product package having a consumable product. The consumable product may be designed for an individual selected from the group consisting of an infant, a toddler, an adolescent, an adult, and an elderly individual, etc. In an embodiment, the consumable product package is a flexible, plastic pouch. In this regard, the package may be a fill-through-fitment package.

In an embodiment, the fitment is a fitment that is configured for use with a flexible, plastic pouch.

In an embodiment, the interior of the body is so constructed and arranged to accept at least a portion of the fitment therein.

In an embodiment, the adapter includes a connector to connect the adapter to the fitment. The connector may include threading on an internal surface of the adapter that is configured to cooperate with threading on an external surface of the fitment to attach the adapter to the fitment. Alternatively, the connector may include at least two, opposing, substantially "L"-shaped projections that are so constructed and arranged to snap-fit the adapter on the fitment.

In an embodiment, the cap component includes threading on an internal surface thereof that is configured to cooperate with threading on an external surface of the valve component to attach the cap component to the valve component. The cap component may be so constructed and arranged to seal the outlet of the valve component body.

In yet another embodiment, a package is provided and includes a flexible plastic pouch that is so constructed and arranged to house a product. The package further includes a fitment having a valve component with a body defining an interior and having an outlet. The outlet includes a diaphragm having a slit. The fitment further includes a cap component that is so constructed and arranged to attach to the valve component to close the outlet.

In another embodiment, a package is provided and includes a flexible plastic pouch that is so constructed and arranged to house a product. The package further includes a fitment having a valve component with a body defining an interior and having an outlet, and a rotatable flow-control device. The fitment further includes a cap component that is so constructed and arranged to attach to the valve component to close the outlet.

In yet another embodiment, a package is provided and includes a flexible plastic pouch that is so constructed and arranged to house a product. The package further includes a fitment having a valve component with a body defining an interior and having an outlet. The outlet is so constructed and arranged to reduce a flow rate of a product exiting the outlet. The fitment further includes a cap component that is so constructed and arranged to attach to the valve component to close the outlet.

In still yet another embodiment, a package is provided and includes a flexible plastic pouch that is so constructed and arranged to house a product. The package further includes a fitment having a valve component with a body defining an interior and having an outlet, wherein the outlet is so constructed and arranged to prevent a product from exiting the outlet absent application of a pressure to the valve component. The fitment further includes a cap component that is so constructed and arranged to attach to the valve component to close the outlet.

In yet another embodiment, a package is provided and includes a flexible plastic pouch that is so constructed and arranged to house a product. The package further includes a fitment having a valve component with a body defining an interior and having an outlet, wherein the outlet is so constructed and arranged to prevent a product from exiting the outlet absent application of a pressure to the valve component. The fitment further includes a cap component that is so constructed and arranged to attach to the valve component to close the outlet.

In another embodiment, a package is provided and includes a flexible plastic pouch that is so constructed and arranged to house a product. The package further includes a fitment having a valve component with a body defining an interior and an outlet at an end of an extension of the body. The extension has a substantially elongated, cylindrical shape. The fitment further includes a cap component that is so constructed and arranged to attach to the valve component to close the outlet.

In another embodiment, a package is provided and includes a flexible plastic pouch that is so constructed and arranged to house a product. The package further includes a fitment having a valve component with a body defining an interior and an outlet at an end of an extension of the body having a substantially duck-bill shape. The fitment further includes a cap component that is so constructed and arranged to attach to the valve component to close the outlet.

In yet another embodiment, a method for providing a nutritional composition to an individual is provided. The method includes providing a package having a flexible plastic pouch with a fitment and being so constructed and arranged to house a product. The package further includes an adapter assembly comprising an adapter having a valve component with a body defining an interior and having an outlet and a connector. The outlet includes a diaphragm having a slit. The connector is configured to attach the valve component to the fitment. The adapter assembly further includes a cap component that is so constructed and arranged to attach to the valve component to close the outlet. The method further includes instructing the individual to consume the nutritional composition.

In still yet another embodiment, a method for providing a nutritional composition to an individual is provided. The method includes providing a package having a flexible plastic pouch with a fitment and being so constructed and arranged to house a product. The package further includes an adapter assembly comprising an adapter having a valve component with a body defining an interior and having an outlet, a connector and a rotatable flow-control device. The connector is configured to attach the valve component to the fitment of the package. The adapter assembly further includes a cap component that is so constructed and arranged to attach to the valve component to close the outlet. The method further includes instructing the individual to consume the nutritional composition.

In yet another embodiment, a method for providing a nutritional composition to an individual is provided. The method includes providing a package having a flexible plastic pouch with a fitment and being so constructed and arranged to house a product. The package further includes an adapter having a valve component with a body defining an interior and having an outlet and a connector. The outlet is so constructed and arranged to reduce a flow rate of a product exiting the outlet. The connector is configured to attach the valve component to the fitment. The adapter further includes a cap component that is so constructed and arranged to attach to the valve component to close the outlet. The method further includes instructing the individual to consume the nutritional composition.

In another embodiment, a method for providing a nutritional composition to an individual is provided. The method includes providing a package having a flexible plastic pouch with a fitment and being so constructed and arranged to house a product. The package further includes an adapter having a valve component with a body defining an interior and having an outlet and a connector. The outlet is so constructed and arranged to prevent a product from exiting the outlet absent application of a pressure to the valve component. The connector is configured to attach the valve component to the fitment. The adapter further includes a cap component that is so constructed and arranged to attach to the valve component to close the outlet. The method further includes instructing the individual to consume the nutritional composition.

In yet another embodiment, a method for providing a nutritional composition to an individual is provided. The method includes providing a package having a flexible plastic pouch with a fitment and being so constructed and arranged to house a product. The package further includes an adapter having a valve component with a body defining an interior and having a connector and an outlet at an end of an extension of the body having a substantially elongated, cylindrical shape. The connector is configured to attach the valve component to the fitment. The adapter further includes a cap component that is so constructed and arranged to attach to the valve component to close the outlet. The method further includes instructing the individual to consume the nutritional composition.

In still yet another embodiment, a method for providing a nutritional composition to an individual is provided. The method includes providing a package having a flexible plastic pouch with a fitment and being so constructed and arranged to house a product. The package further includes an adapter having a valve component with a body defining an interior and having a connector and an outlet at an end of an extension of the body having a substantially duck-bill shape. The connector is configured to attach the valve component to the fitment. The adapter further includes a cap component that is so constructed and arranged to attach to the valve component to close the outlet. The method further includes instructing the individual to consume the nutritional composition.

It is an advantage of the present disclosure to provide improved consumable product packages.

It is also an advantage of the present disclosure to provide consumable product packages that are aesthetically pleasing to children, yet functional for feeding children.

It is another advantage of the present disclosure to provide consumable product packages that aid children in self-feeding.

It is yet another advantage of the present disclosure to provide consumable product packages having improved functional features.

It is still yet another advantage of the present disclosure to provide consumable product packages that improve the emptying efficiency of the containers during consumption.

It is another advantage of the present disclosure to provide consumable product packages that prevent loss of product during toddler feedings.

Additional features and advantages are described herein, and will be apparent from the following Detailed Description and the figures.

### BRIEF DESCRIPTION OF THE FIGURES

FIG. 1 is a perspective view of a prior art consumable product package.
FIG. 2 is an exploded perspective view of a consumable product package in accordance with an embodiment of the present disclosure.
FIG. 3 is a perspective view of a package adapter in accordance with an embodiment of the present disclosure wherein a rotatable flow-control device as comprised in claim 1 is provided.
FIG. 4 is a perspective view of a package adapter in accordance with an embodiment of the present disclosure.
FIG. 5 is a perspective view of a package adapter in accordance with an embodiment of the present disclosure.
FIG. 6 is a perspective view of a package adapter in accordance with an embodiment of the present disclosure.
FIG. 7 is a perspective view of a package adapter in accordance with an embodiment of the present disclosure.
FIG. 8 is a perspective view of a package adapter in accordance with an embodiment of the present disclosure.
FIG. 9 is a perspective view of a package adapter in accordance with an embodiment of the present disclosure.
FIG. 10 is a perspective view of a package adapter in accordance with an embodiment of the present disclosure.

### DETAILED DESCRIPTION

As used herein, "about" is understood to refer to numbers in a range of numerals. Moreover, all numerical ranges herein should be understood to include all integer, whole or fractions, within the range.

As used in this disclosure and the appended claims, the singular forms "a," "an" and "the" include plural referents unless the context clearly dictates otherwise. Thus, for example, reference to "a polypeptide" includes a mixture of two or more polypeptides, and the like.

The present disclosure provides packages for housing consumable products, as well as adapters for such consumable product packages. The adapters are designed to provide known consumable products packages with functional fitment features such as, for example, flow-control, spill resistance, etc. In this regard, packages having the functional adapters may be custom designed for a variety of uses including, for example, ease of use by toddlers, prevention of spills of the container contents, control of the flow of the containers contents during use, etc. The present packages may also provide increased purchase interest and marketability amongst consumers.

The consumable products housed by the packages may be any semi-solid, gel, liquid, or pureed consumable products including, for example, baby foods, snack foods, full meals, side meals, etc. In an embodiment, the packages house foods for children (e.g., infants, toddlers, pre-schoolers, etc.) including, for example, fruits, vegetables, grains, cereals, pastas, etc. The teachings of the present disclosure, therefore, are not dependent upon the consumable products being of any particular type so long as the products fit within, and is able to be removed from, the packages described herein. Similarly, the teachings of the present disclosure are not limited to consumable products and may include any semi-solid, gel, liquid, or pureed composition. The packages may also house products for an adolescent, an adult, and elderly individual, an athlete, etc.

In an embodiment, the bodies of the packages of the present disclosure are known. For example, in an embodiment, the bodies of the packages are flexible, plastic pouches. The flexible, plastic pouches may include a fitment located at an edge of the pouch to which the adapters of the present disclosure can be attached. Alternatively, the flexible, plastic pouches may include a custom designed fitment located at an edge of the pouch. In another embodiment, the bodies of packages of the present disclosure may be made from layered materials to provide a flexible, soft-sided package that is able to stand upright but still be deformable by a toddler's grasp. Further, at least a portion of the bodies can be either transparent or translucent so that a consumer can readily discern what types of products are housed in the compartments of the packages. Alternatively, at least a portion of the bodies may be opaque.

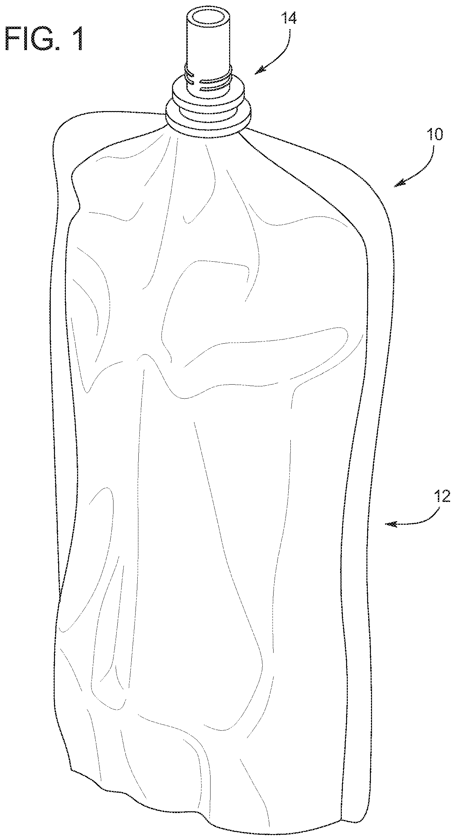

As shown in FIG. 1, a prior art package 10 for storing consumable products is provided. Package 10 includes a body 12 defining an interior compartment for containing a product, and a fitment 14 for filling package 10 with a product and/or for emptying package 10 of its products. An example of such a known package 10 is a fill-through-fitment package. As used herein, a "fill-through-fitment" package is a flexible, plastic pouch having a fitment located at an edge of the pouch through which a consumable product is filled during production. Current fill-through-fitment ("FTF") manufacturing processes require unobstructed flow of product from a filling nozzle through the fitment and into the package. This manufacturing requirement, however, does not allow for the use of functional fitments that can aid in, for example, flow-control of the product from the package, spill-resistance of the product, etc. Accordingly, to allow for use of functional fitments with such packages current manufacturing equipment would have to be replaced with specialized filling equipment, which would be both time- and cost-intensive. This solution, then, would not be ideal to most manufacturers.

Instead, the present disclosure is directed to the use of custom designed adapters that may be used in combination with known FTF packages (e.g., pouches). The presently disclosed adapters would allow for typical FTF manufacturing procedures, but would also provide the consumer with functional advantages including, for example, ease of use by toddlers, prevention of spills of the container contents, control of the flow of the containers contents during use, etc. Such a configuration will prevent the expenditure of the excessive time and costs involved with replacing highly sophisticated manufacturing equipment, and will also provide at least the above-mentioned advantages to the consumer during use of the final product. The skilled artisan will also appreciate that such a configuration will also allow for use with any other threaded package closures, and need not be limited to use with fill-through-fitment package closures.

Similarly, while the present disclosure is directed to custom designed adapters and packages including same, the skilled artisan will appreciate that the present disclosure need not be limited to such an embodiment. For example, in an alternative embodiment, a form-fill-seal or a fill-seal manufacturing process may be used and a custom designed fitment may be added to the package after filling of the product. These alternative embodiments will be discussed further below.

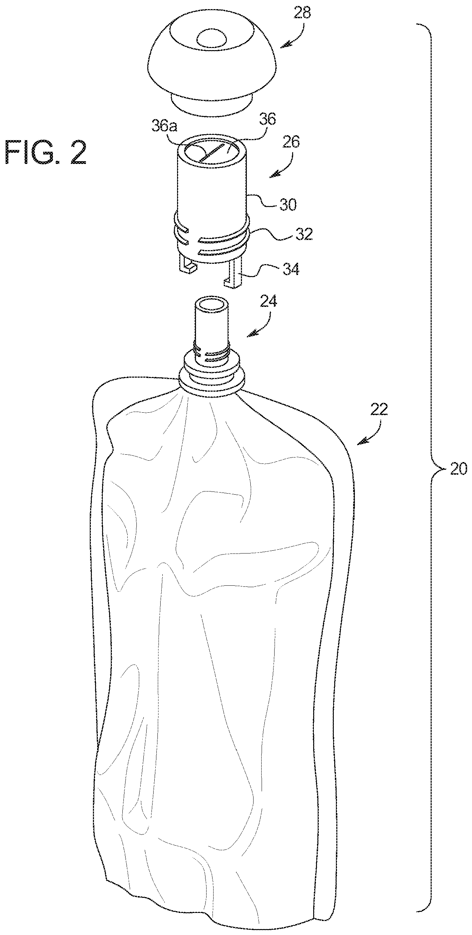

FIG. 2 illustrates an embodiment of a package 20 in accordance with the present disclosure. Package 20 includes a known consumable package (e.g., a FTF pouch) 22 having a fitment 24, and a two-piece custom adapter, which includes a valve component 26 and a cap component 28. Valve component 26 is designed to attach to fitment 24 to provide package 20 with a functional feature including, for example, flow-control, spill-resistance, etc. Cap component 28 is designed to mate with valve component 26 to provide closure for package 20. Both of these components will be discussed further below.

In an embodiment, and as shown in FIG. 2, valve component 26 includes a body 30 having threading 32, a connector 34 and a functional feature 36. Body 30 may have any size or shape known in the art so long as body 30 is able to easily attach to fitment 24 and provide the desired functional feature. For example, body 30 may be substantially cylindrical in shape so as to house at least a portion of fitment 24 within and so as to be easily and comfortably inserted into a consumer's mouth. In this embodiment, cylindrical body 30 should have an appropriate diameter and length, which the skilled artisan will be able to appreciate. Body 30 may be manufactured from a material selected from the group consisting of plastic, metal, cardboard, or any other suitable material. In an embodiment, body 30 is manufactured using polymeric materials including, but not limited to, polyethylene ("PE"), low density polyethylene ("LDPE"), high density polyethylene ("HDPE"), polypropylene ("PP"), polystyrene ("PS"), and polyethylene terephthalate ("PET"). Body 30 may be manufactured using any suitable manufacturing process such as, for example, thermoforming, conventional extrusion blow molding, stretch blow molding, injection stretch blow molding, and the like.

Body 30 may include threading 32 on an exterior surface thereof that cooperates with threading (not shown) on an interior surface of cap component 28 to allows cap component 28 to thread onto valve component 26 to close package 20.

Body 30 may also include a connector 34 that connects valve component 26 to fitment 24. In an embodiment, and as shown in FIG. 2, connector 34 may be substantially "L"-shaped so as to cooperate with known fitment configurations. In this regard, the short, horizontal portions of connector 34 may lock or snap around the horizontal, disc-like portion of fitment 24 to prevent valve component 26 from being easily removed from fitment 24. The skilled artisan will appreciate, however, that connector 34 is not limited to such configuration and that any configuration of connector 34 that prevents easy removal of valve component 26 from fitment 24 would be acceptable. For example, connector 34 may be threading that cooperates with threading on fitment 24. Alternatively, valve component 26 may be adhered to fitment 24 after filling of package 20.

As discussed above, valve component 26 is designed to provide a functional feature to the fitments of consumable product packages. Such functional features may include, but are not limited to, flow-control, spill-resistance, ease of use of the fitment/adapters, etc. For example, and as shown in FIG. 2, valve component 26 may include a diaphragm 36 that is designed to prevent spilling of the contents of package 20 and includes an outlet 36a (e.g., a slit). Diaphragm 36 may be any known diaphragm that is capable of preventing or substantially reducing spillage of the contents of package 20 when package 20 is tipped, rotated or otherwise positioned to empty at least a portion of the contents thereof. In this regard, the skilled artisan will appreciate that the tension of diaphragm 36 and outlet 36a may be different for different viscosities of consumable product. The skilled artisan will also appreciate that diaphragm 36 is not the only structural feature that is capable of providing spill-resistance and that the present disclosure is, therefore, not limited to such structure.

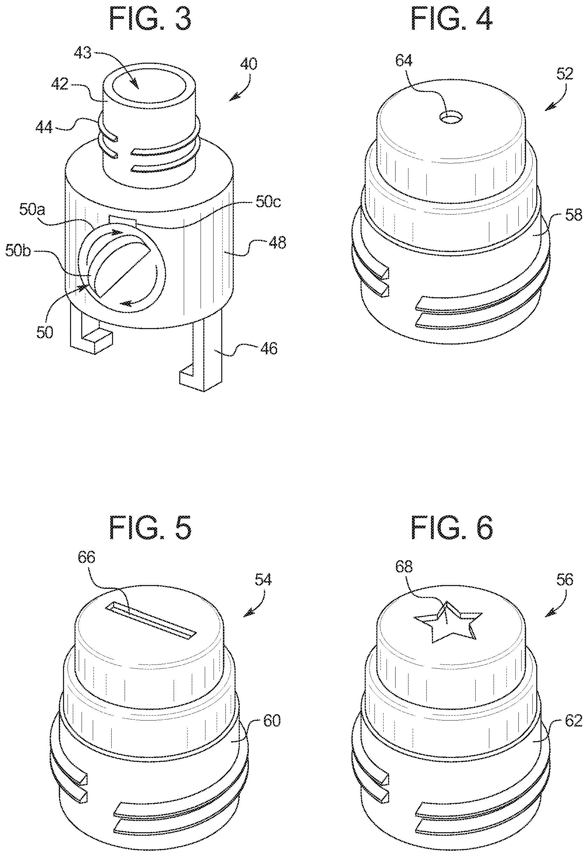

One functional feature that is incorporated into the valve component of the adapter assembly of the present invention is flow-control. As shown in FIG. 3, valve component 40 is provided and includes a spout portion 42 having outlet 43, threading 44, a connector 46 and a body portion 48 having a flow-control device 50. Similar to valve component 26, valve component 40 may have any size or shape known in the art so long as it is able to easily attach to fitment 24 and provide the desired functional feature. For example, spout portion 42 may be substantially cylindrical in shape so as to be easily and comfortably inserted into a consumer's mouth. In this embodiment, spout portion 42 should have an appropriate diameter and length, which the skilled artisan will be able to appreciate.

Valve component 40 may be manufactured from a material selected from the group consisting of plastic, metal, cardboard, or any other suitable material. In an embodiment, body 30 is manufactured using polymeric materials including, but not limited to, polyethylene ("PE"), low density polyethylene ("LDPE"), high density polyethylene ("HDPE"), polypropylene ("PP"), polystyrene ("PS"), and polyethylene terephthalate ("PET"). Valve component 40 may be manufactured using any suitable manufacturing process such as, for example, thermoforming, conventional extrusion blow molding, stretch blow molding, injection stretch blow molding, and the like.

Spout portion 42 may include threading 44 on an exterior surface thereof that cooperates with threading (not shown) on an interior surface of a cap component that is similar to, or the same as, cap component 28.

Valve component 40 includes connector 46 that connects valve component 40 to a fitment that may be the same as, or similar to, fitment 24. In an embodiment, and as shown in FIG. 3, connector 46 may be substantially "L"-shaped so as to cooperate with known fitment configurations. In this regard, the short, horizontal portions of connector 46 may lock or snap around the horizontal, disc-like portion of, for example, fitment 24 to prevent valve component 40 from being easily removed from fitment 24. The skilled artisan will appreciate, however, that connector 46 is not limited to such configuration and that any configuration of connector 46 that prevents easy removal of valve component 40 from fitment 24 would be acceptable. For example, connector 46 may be threading that cooperates with threading on fitment 24. Alternatively, valve component 40 may be adhered to fitment 24 after filling of the package.

As shown in FIG. 3, valve component 40 includes body portion 48 including flow-control device 50. Body portion 48 may be integrally formed with other components of valve component 40 including, but not limited to, spout portion 42 and connector 46. Alternatively, body portion 48 may be formed separately from and attached to other components of valve component 40. While body portion 48 is depicted in FIG. 3 as being substantially square, the skilled artisan will appreciate that body portion 48 may have any size or shape known in the art so long as body portion 48 is capable of providing flow-control through flow-control device 50.

As shown in FIG. 3, flow-control device 50 of valve component 40 further includes a cylinder 50a having a handle 50b and a hole (not shown) that extends through cylinder 50a in a direction that is substantially parallel to a diameter of cylinder 50a. In this manner, when handle 50b is rotated (as shown, for example, by the arrows in FIG. 3), the hole in cylinder 50a is also rotated and brought into or out of alignment with corresponding holes (not shown) in spout portion 42 and body portion 48. Accordingly, when the hole in cylinder 50a is in full alignment with the corresponding holes in spout portion 42 and body portion 48, the contents of the package to which valve component 40 is attached may flow freely from the package. However, when the flow-control device 50 is rotated using handle 50b, the flow of the package contents may slow in relation to the degree of alignment between the hole in cylinder 50a and the corresponding holes in spout portion 42 and body portion 48. The skilled artisan will immediately appreciate how such a flow-control device would operate.

Because the consumable product packages of the present disclosure may contain consumable products for children to consume directly from the package, flow-control device 50 may also include a stopping mechanism 50c. Stopping mechanism 50c may be, for example, a door, a snap-on device, a tab, or a similar structure that prevents rotation of handle 50b. Alternatively, stopping mechanism 50c may be spring mechanism that prevents rotation of handle 50b and that may be activated by pressing a tab or small button to allow for rotation of handle 50b.

Alternative embodiments for the adapters of the present disclosure may also be provided. In this regard, the adapters, or valve components, of the packages may provide flow control via the use of a reducer. As used herein, a "reducer" is a valve component that provides an outlet of a restricted size to allow for a slower flow of product from the package to which the valve component is attached. For example, and as shown by FIGS. 4-6, valve components 52, 54, 56 may be provided and include body portions 58, 60, 62 and outlets 64, 66. 68. In these embodiments, outlets 64, 66, 68 are of a reduced size when compared to an outer diameter or width of bodies 58, 60, 62. Accordingly, outlets 64, 66, 68 reduce the flow rate of the product exiting the product package.

The skilled artisan will appreciate that the adapters of the present disclosure may include reducers having outlets of any known size or shape so long as the outlets are able to reduce the flow rate of the product exiting the product package. For example, and as shown in FIG. 4, valve component 52 may include an outlet 64 that is substantially circular in shape. Outlet 64 may have a diameter ranging in size from 6.4 mm to about 25.4 mm, 7.6 mm, 8.9 mm, 10.2 mm, 11.4 mm, 12.7 mm, 14.0 mm, 15.2 mm, 16.5 mm, 17.8 mm, 19.1 mm, 20.3 mm, 21.6 mm, 22.9 mm, 24.1 mm (0.25 in to about 1 in, or 0.3 in, 0.35 in, 0.4 in, 0.45 in, 0.5 in, 0.55 in, 0.6 in, 0.65 in, 0.7 in, 0.75 in, 0.8 in, 0.85 in, 0.9 in, 0.95 in), or the like. In another embodiment, and as shown in FIG. 5, valve component 54 may include an outlet 66 in the shape of a rectangle, which may have a width and/or a length that is similar to the diameter of outlet 64. In yet another embodiment, and as shown in FIG. 6, valve component 56 may include an outlet 68 in the shape of a star. Again, the skilled artisan will appreciate that the outlets of the presently disclosed valve components may be any known size or shape so long as the outlets are able to reduce the flow rate of the product exiting the product package. Therefore, in an embodiment, an outlet of a valve component may have a geometric shape selected from the group consisting of a circle, star, rectangle, square, triangle, semi-circle, oval, trapezoid, crescent, pentagon, etc. Alternatively, an outlet of the valve component may have the shape of a number or a letter such as, but not limited to, 1, 2, 3, A, B, C, etc.

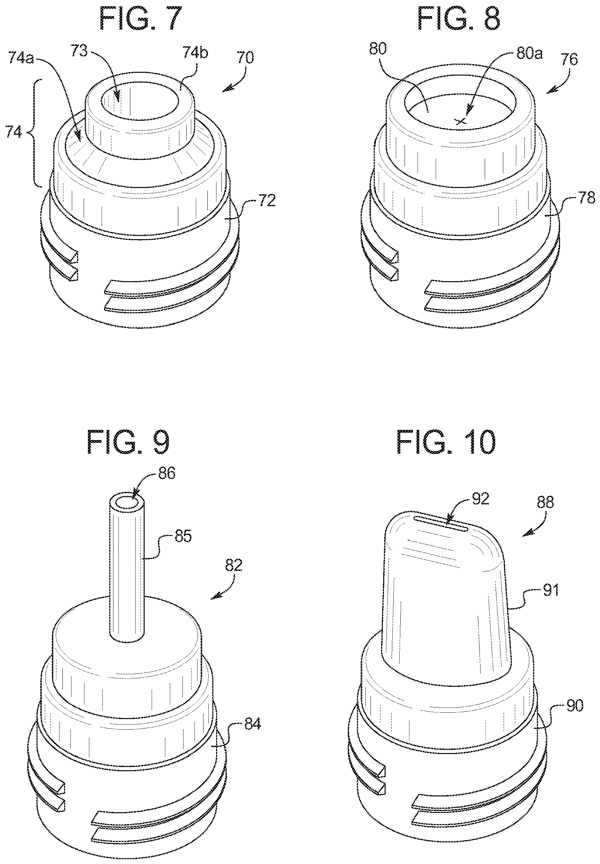

In yet another embodiment, the valve components of the present disclosure may include a contact-to-open functional feature. For example, and as shown in FIG. 7, valve component 70 includes a body portion 72 that attaches to a product package fitment and a contact-to-open portion 74. Contact-to-open portion 74 provides the ability to prevent any product flow from valve component 70 absent pressure on outer ring portion 74a. In this manner, if a toddler were provided with a consumable product package having contact-to-open portion 74, the toddler could place her lips and/or teeth on outer ring portion 74a to apply pressure that would allow flow of the consumable product from the package through outlet 73 in spout portion 74b.

In still yet another embodiment, the valve components of the present disclosure may include a silicone diaphragm that prevents or slows the flow of product from the package to which the valve component is attached. For example, and as shown in FIG. 8, valve component 76 may include a body portion 78 and a silicone diaphragm 80. Silicone diaphragm 80 can include an outlet 80a (e.g., a slit) therein that prevents or slows the flow of product from the package to which valve component 76 is attached. Slit 80a may be any size or shape known in the art that is capable of preventing or reducing a product flow rate. For example, although slit 80a is illustrated in FIG. 8 as being substantially "x"-shaped, slit 80a may also have a shape that is linear, semi-circular, crescent, etc.

As shown in FIGS. 9 and 10, the valve components of the present disclosure may also provide additional functional features such as ease of product removal, ease of mouth insertion, etc. For example, valve component 82 of FIG. 9 includes a body portion 84 and an elongated, substantially cylindrical straw portion 85 extending from body portion 84 and having an outlet 86. Straw portion 85 allows for easy insertion into a consumer's mouth and easy removal of the consumable product from the package to which valve component 82 is attached. In this regard, a toddler is able to easily insert straw portion 85 into her mouth and suck out the contents of the package to which valve component 82 is attached.

The valve components of the present disclosure may also include other structural details that provide advantages for a consumer during use. For example, and as shown in FIG. 10, valve component 88 includes a body portion 90 and a duck-bill portion 91 extending from body portion 90 and having an outlet 92. Duck-bill portion 91 provides for comfortable, easy insertion into a consumer's mouth for removal of the consumable product within the package to which valve component 88 is attached.

As stated previously, the custom adapters of the present disclosure can include custom fit caps in addition to the valve components. The skilled artisan will appreciate that the custom fit caps may be any size or shape known in the art so long as the caps are designed to mate with the valve components to close the valve components and seal the packages from external contamination. The skilled artisan will also appreciate that the cap dimensions may vary depending on the shape and size of the valve components for which the cap is designed. For example, cap 28 of package 20 may be designed to mate not only with valve component 26, but also with valve components 40, 52, 54, 56, 70, 76 of FIGS. 3-8, respectively. Alternatively, valve components 82, 88 of FIGS. 9 and 10, respectively, may require caps having a different size and shape. During use, the cap components of the of the presently disclosed adapters are removed in order to access the product in the package, while the valve component remains attached to the fitment of the package.

The valve components and cap components discussed this far in the disclosure are capable of being retrofitted to known product packages. For example, the two-component adapters described thus far may be designed to work with currently known fitments and may be used on existing product manufacturing lines (e.g., FTF pouch filling lines). The two-component adapters may be pre-assembled and used in existing manufacturing lines (e.g., FTF pouch filling lines) as a single component. Alternatively, the two-component adapters may be assembled with known product packages in a two-step process that first attaches the valve component to the known fitment before attaching the custom cap to the valve component. These custom adapters enable manufacturers to deliver a unique fitment with a functional benefit (e.g., flow-control, spill-proof, etc.) targeted for specific consumers (e.g., infants, toddlers, athletes, etc.).

In an alternative embodiment, the two-component adapters of the present disclosure may be used with manufacturing lines that do not require the use of a preexisting fitment (e.g, a FTF manufacturing line). Instead, the two-component adapters may be used with manufacturing lines wherein the two-component adapter may be attached to the product package after filling. For example, the two-component adapters may be attached to a product package (e.g., a pouch) after filling of the package via a form-fill-seal ("FFS") process or a fill-seal ("FS") process. In this regard, the custom designed two-component adapters of the present disclosure need not be retrofitted to a known fitment, but rather may be attached directed to the consumable product package. In this regard, the skilled artisan will appreciate that the valve component portion of the two-component adapter would be structurally modified to allow direct connection to the product package (e.g., the valve component portion may include a portion on it's bottom that allows for insertion into and attachment to a consumable product package).

In yet another embodiment, a method for providing a nutritional composition to an individual is provided. The method includes providing package having a flexible plastic pouch with a fitment and being so constructed and arranged to house a product. The package further includes an adapter having a valve component with a body defining an interior and having an outlet and a connector. The outlet includes a diaphragm having a slit. The connector is configured to attach the valve component to the fitment. The adapter further includes a cap component that is so constructed and arranged to attach to the valve component to close the outlet. The method further includes instructing the individual to consume the nutritional composition.

In still yet another embodiment, a method for providing a nutritional composition to an individual is provided. The method includes providing a package having a flexible plastic pouch with a fitment and being so constructed and arranged to house a product. The package further includes an adapter having a valve component with a body defining an interior and having an outlet, a connector and a rotatable flow-control device. The connector is configured to attach the valve component to the fitment. The adapter further includes a cap component that is so constructed and arranged to attach to the valve component to close the outlet. The method further includes instructing the individual to consume the nutritional composition.

In yet another embodiment, a method for providing a nutritional composition to an individual is provided. The method includes providing a package having a flexible plastic pouch with a fitment and being so constructed and arranged to house a product. The package further includes an adapter having a valve component with a body defining an interior and having an outlet and a connector. The outlet is so constructed and arranged to reduce a flow rate of a product exiting the outlet. The connector is configured to attach the valve component to the fitment. The adapter further includes a cap component that is so constructed and arranged to attach to the valve component to close the outlet. The method further includes instructing the individual to consume the nutritional composition.

In another embodiment, a method for providing a nutritional composition to an individual is provided. The method includes providing a package having a flexible plastic pouch with a fitment and being so constructed and arranged to house a product. The package further includes an adapter having a valve component with a body defining an interior and having an outlet and a connector. The outlet is so constructed and arranged to prevent a product from exiting the outlet absent application of a pressure to the valve component. The connector is configured to attach the valve component to the fitment. The adapter further includes a cap component that is so constructed and arranged to attach to the valve component to close the outlet. The method further includes instructing the individual to consume the nutritional composition.

In yet another embodiment, a method for providing a nutritional composition to an individual is provided. The method includes providing a package having a flexible plastic pouch with a fitment and being so constructed and arranged to house a product. The package further includes an adapter having a valve component with a body defining an interior and having a connector and an outlet at an end of an extension of the body having a substantially elongated, cylindrical shape. The connector is configured to attach the valve component to the fitment. The adapter further includes a cap component that is so constructed and arranged to attach to the valve component to close the outlet. The method further includes instructing the individual to consume the nutritional composition.

In still yet another embodiment, a method for providing a nutritional composition to an individual is provided. The method includes providing a package having a flexible plastic pouch with a fitment and being so constructed and arranged to house a product. The package further includes an adapter having a valve component with a body defining an interior and having a connector and an outlet at an end of an extension of the body having a substantially duck-bill shape. The connector is configured to attach the valve component to the fitment. The adapter further includes a cap component that is so constructed and arranged to attach to the valve component to close the outlet. The method further includes instructing the individual to consume the nutritional composition.

It should be understood that various changes and modifications to the presently preferred embodiments described herein will be apparent to those skilled in the art. Such changes and modifications can be made without departing from the scope of the present subject matter and without diminishing its intended advantages, provided that such changes and modifications are covered by the appended claims.

## Claims

1. An adapter assembly comprising:
an adapter comprising an outlet (43), wherein the adapter is so constructed and arranged to provide a functional feature and comprises a body portion that is so constructed and arranged to accept at least a portion of a fitment on a package;
wherein the adapter comprises a valve component (40) comprising a body (48) defining an interior and having the outlet (43) of the adapter, a connector (46) and a rotatable flow-control device (50),
the connector (46) being configured to connect the adapter to the fitment,
**characterized in that**
the flow-control device (50) comprises a cylinder (50a) having an axis of rotation that is perpendicular to an axis of rotation of the valve component (40),
wherein the cylinder (50a) comprises a hole extending through the cylinder (50a) in a direction that is parallel to a diameter of the cylinder (50a), wherein the hole is so constructed and arranged to wholly or partially align with the interior of the body (48) of the valve component (40) depending on the rotation of the flow-control device (50), and
wherein the adapter assembly further comprises a cap (28) that is so constructed and arranged to attach to the adapter to close the outlet (43).

2. The adapter assembly of Claim 1, wherein the adapter comprises at least one diaphragm having a slit, wherein the slit comprises a shape selected from the group consisting of a line, an "x," a crescent, and combinations thereof.

3. The adapter assembly of any one of Claims 1-2, wherein the connector (46) comprises threading on an internal surface of the adapter that is configured to cooperate with threading on an external surface of the fitment to attach the adapter to the fitment, or
wherein the connector (46) comprises at least two, opposing, substantially "L"-shaped projections that are so constructed and arranged to snap-fit the adapter on the fitment.

4. The adapter assembly of any one of Claims 1-3, wherein the cap comprises threading on an internal surface thereof that is configured to cooperate with threading (44) on an external surface of the adapter to attach the cap to the adapter.

5. The adapter assembly of any one of Claims 1-4, wherein the flow-control device (50) extends substantially through a width of the body (48) of the valve component (40).

6. The adapter assembly of any one of Claims 1-5, wherein the flow-control device (50) comprises a handle (50b) for rotating the flow-control device (50).

7. A package (20) comprising:
A flexible pouch (22);
a fitment (24) on the pouch (22);
an adapter assembly according to any one of Claims 1-6,
wherein the flexible pouch (22) is so constructed and arranged to house a product.

8. The package (20) of Claim 7, wherein the package (20) is a consumable product package comprising a consumable product.

9. The package of any one of Claims 7-8, wherein the package (20) is a fill-through-fitment package.

10. A method for providing a nutritional composition to an individual, the method comprising:
providing a package (20) comprising a flexible pouch (22);
a fitment on the pouch (22);
an adapter assembly according to any one of Claims 1-6,
wherein the flexible pouch (22) is so constructed and arranged to house a consumable product package and contains a consumable product; and
instructing the individual to consume the nutritional composition themselves or have another consume the nutritional composition.

## Patentansprüche

1. Adapterbaugruppe, umfassend:
einen Adapter, der einen Auslass (43) umfasst, wobei der Adapter so aufgebaut und angeordnet ist, dass eine Funktionseigenschaft bereitgestellt wird, und einen Körperabschnitt umfasst, der so aufgebaut und angeordnet ist, dass mindestens ein Abschnitt eines Passstücks an einer Verpackung aufgenommen wird;
wobei der Adapter ein Ventilbauteil (40) umfasst, das einen Körper (48) umfasst, der einen Innenraum definiert und einen Auslass (43) des Adapters, einen Verbinder (46) und eine drehbare Durchflusssteuervorrichtung (50) aufweist,
wobei der Verbinder(46) eingerichtet ist, um den Adapter mit dem Passstück zu verbinden,
**dadurch gekennzeichnet, dass**
die Durchflusssteuervorrichtung (50) einen Zylinder (50a) umfasst, der eine Drehachse senkrecht zu einer Drehachse des Ventilbauteils (40) aufweist,
wobei der Zylinder (50a) ein Loch aufweist, das sich in einer Richtung parallel zu einem Durchmesser des Zylinders (50a) durch den Zylinder (50a) erstreckt, wobei das Loch so aufgebaut und angeordnet ist, dass es sich je nach Drehung der Durchflusssteuervorrichtung (50) ganz oder teilweise auf den Innenraum des Körpers (48) des Ventilbauteils (40) ausrichtet, und
wobei die Adapterbaugruppe ferner eine Kappe (28) umfasst, die so aufgebaut und angeordnet ist, dass sie an dem Adapter befestigt werden kann, um den Auslass (43) zu schließen.

2. Adapterbaugruppe nach Anspruch 1, wobei der Adapter mindestens eine Membran umfasst, die einen Schlitz aufweist, wobei der Schlitz eine Form umfasst, die ausgewählt ist aus der Gruppe bestehend aus einer Linie, einem "x", einer Sichel und Kombinationen davon.

3. Adapterbaugruppe nach einem der Ansprüche 1 bis 2, wobei der Verbinder (46) ein Gewinde an einer Innenfläche des Adapters umfasst, das eingerichtet ist, um mit einem Gewinde an einer Außenfläche des Passstücks zusammenzuwirken, um den Adapter am Passstück zu befestigen, oder
wobei der Verbinder (46) mindestens zwei gegenüberliegende, im Wesentlichen L-förmige Vorsprünge umfasst, die so aufgebaut und angeordnet sind, dass sie in den Adapter am Passstück einrasten.

4. Adapterbaugruppe nach einem der Ansprüche 1 bis 3, wobei die Kappe ein Gewinde an einer Innenseite davon umfasst, das eingerichtet ist, um mit einem Gewinde (44) an einer Außenseite des Adapters zusammenzuwirken, um die Kappe am Adapter zu befestigen.

5. Adapterbaugruppe nach einem der Ansprüche 1 bis 4, wobei sich die Durchflusssteuervorrichtung (50) im Wesentlichen durch eine Breite des Körpers (48) des Ventilbauteils (40) erstreckt.

6. Adapterbaugruppe nach einem der Ansprüche 1 bis 5, wobei die Durchflusssteuervorrichtung (50) einen Handgriff (50b) zum Drehen der Durchflusssteuervorrichtung (50) umfasst.

7. Verpackung (20), umfassend:
einen flexiblen Beutel (22);
ein Passstück (24) am Beutel (22);
eine Adapterbaugruppe nach einem der Ansprüche 1 bis 6,
wobei der flexible Beutel (22) so aufgebaut und angeordnet ist, dass er ein Produkt aufnimmt.

8. Verpackung (20) nach Anspruch 7, wobei die Verpackung (20) eine Verpackung für verzehrbare Produkte ist, die ein verzehrbares Produkt umfasst.

9. Verpackung nach einem der Ansprüche 7 bis 8, wobei die Verpackung (20) eine Verpackung ist, die durch das Passstück gefüllt wird.

10. Verfahren zum Bereitstellen einer Nährstoffzusammensetzung für eine Person, wobei das Verfahren umfasst:
Bereitstellen einer Verpackung (20), die einen flexiblen Beutel (22) umfasst;
ein Passstück am Beutel (22);
eine Adapterbaugruppe nach einem der Ansprüche 1 bis 6,
wobei der flexible Beutel (22) so aufgebaut und angeordnet ist, dass er eine Verpackung für verzehrbare Produkte aufnimmt und ein verzehrbares Produkt enthält; und
Anweisen der Person, die Nährstoffzusammensetzung selbst zu verzehren oder eine andere Person die Nährstoffzusammensetzung verzehren zu lassen.

## Revendications

1. Ensemble adaptateur comprenant :
un adaptateur comprenant une sortie (43), dans lequel l'adaptateur est construit et agencé pour fournir une caractéristique fonctionnelle et comprend une partie de corps qui est construite et agencée pour accepter au moins une partie d'un accessoire sur un emballage ;
dans lequel l'adaptateur comprend un composant de soupape (40) comprenant un corps (48) définissant un intérieur et ayant la sortie (43) de l'adaptateur, un connecteur (46) et un dispositif de commande d'écoulement rotatif (50),
le connecteur (46) étant configuré pour raccorder l'adaptateur à l'accessoire,
**caractérisée en ce que**
le dispositif de commande d'écoulement (50) comprend un cylindre (50a) ayant un axe de rotation qui est perpendiculaire à un axe de rotation du composant de soupape (40),
dans lequel le cylindre (50a) comprend un trou s'étendant à travers le cylindre (50a) dans une direction qui est parallèle à un diamètre du cylindre (50a), dans lequel le trou est construit et agencé pour s'aligner complètement ou partiellement avec l'intérieur du corps (48) du composant de soupape (40) en fonction de la rotation du dispositif de commande d'écoulement (50) et
dans lequel l'ensemble adaptateur comprend en outre un capuchon (28) qui est construit et agencé pour se fixer à l'adaptateur pour fermer la sortie (43).

2. Ensemble adaptateur selon la revendication 1, dans lequel l'adaptateur comprend au moins un diaphragme ayant une fente, dans laquelle la fente comprend une forme choisie dans le groupe constitué d'une ligne, une « X », un croissant et leurs combinaisons.

3. Ensemble adaptateur selon l'une quelconque des revendications 1 à 2, dans lequel le connecteur (46) comprend un filetage sur une surface interne de l'adaptateur qui est configuré pour coopérer avec un filetage sur une surface externe de l'accessoire pour fixer l'adaptateur à l'accessoire ou
dans lequel le connecteur (46) comprend au moins deux saillies opposées, sensiblement en forme de « L », qui sont construites et agencées pour encliqueter l'adaptateur sur l'accessoire.

4. Ensemble adaptateur selon l'une quelconque des revendications 1 à 3, dans lequel le capuchon comprend un filetage sur une surface interne de celui-ci qui est configuré pour coopérer avec un filetage (44) sur une surface externe de l'adaptateur pour fixer le capuchon à l'adaptateur.

5. Ensemble adaptateur selon l'une quelconque des revendications 1 à 4, dans lequel le dispositif de commande d'écoulement (50) s'étend sensiblement à travers une largeur du corps (48) du composant de soupape (40).

6. Ensemble adaptateur selon l'une quelconque des revendications 1 à 5, dans lequel le dispositif de commande d'écoulement (50) comprend une poignée (50b) pour faire tourner le dispositif de commande d'écoulement (50).

7. Emballage (20), comprenant :
une poche souple (22) ;
un accessoire (24) sur la poche (22) ;
un ensemble adaptateur selon l'une quelconque des revendications 1 à 6,
dans lequel la poche souple (22) est construite et agencée pour loger un produit.

8. Emballage (20) selon la revendication 7, dans lequel l'emballage (20) est un emballage de produit consommable comprenant un produit consommable.

9. Emballage selon l'une quelconque des revendications 7 à 8, dans lequel l'emballage (20) est un emballage de remplissage par accessoire.

10. Procédé pour fournir une composition nutritionnelle à un individu, le procédé comprenant les étapes consistant à :
fournir un emballage (20) comprenant une poche souple (22) ;
un accessoire sur la poche (22) ;
un ensemble adaptateur selon l'une quelconque des revendications 1 à 6,
dans lequel la poche souple (22) est construite et agencée pour loger un emballage de produit consommable et contient un produit consommable ; et
donner pour instruction à l'individu de consommer la composition nutritionnelle lui-même ou d'amener une autre personne à consommer la composition nutritionnelle.
